(19) Europäisches Patentamt
European Patent Office
Office européen des brevets

(11) EP 4 297 241 A1

(12) EUROPEAN PATENT APPLICATION
published in accordance with Art. 153(4) EPC

(43) Date of publication:
27.12.2023 Bulletin 2023/52

(51) International Patent Classification (IPC):
H02J 50/20 $^{(2016.01)}$   H02J 50/90 $^{(2016.01)}$

(21) Application number: 21934995.8

(52) Cooperative Patent Classification (CPC):
H02J 50/20; H02J 50/90

(22) Date of filing: 31.03.2021

(86) International application number:
PCT/JP2021/014101

(87) International publication number:
WO 2022/208833 (06.10.2022 Gazette 2022/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Aeterlink Corp.
Tokyo 100-0004 (JP)

(72) Inventors:
• KODATE, Naoto
Tokyo 160-0015 (JP)
• TANABE, Yuji
Tokyo 160-0015 (JP)

(74) Representative: Flügel Preissner Schober Seidel
Patentanwälte PartG mbB
Nymphenburger Straße 20
80335 München (DE)

(54) POWER RECEIVING DEVICE FOR PERFORMING MAXIMUM CURRENT POINT TRACKING CONTROL

(57) To provide a specific method that is feasible and effective for performing MCPT control with a relatively simple configuration. A power-receiving device for receiving electric power transmitted from a power-transmitting device, based on a wireless power transfer method is provided. The power-receiving device includes: a power-receiving antenna for receiving electromagnetic waves; a rectifier functionally connected to the power-receiving antenna for converting the electromagnetic waves into DC voltages; a controller functionally connected to the rectifier for adjusting a resistance on an output side of the rectifier; and a power storage device for storing an output of the controller. Voltage-current characteristics of the rectifier vary according to a distance between the power-transmitting device and the power-receiving device. The controller is adapted for performing MCPT control by stepwisely changing a resistance value so that a voltage value on the output side of the rectifier is lower than a predetermined threshold value.

FIG. 4

EP 4 297 241 A1

**Description**

TECHNICAL FIELD

The present invention relates to Maximum Power Point Tracking control or Maximum Current Point Tracking control at a time when electricity is supplied.

BACKGROUND

Conventionally, Maximum Power Point Tracking (MPPT) control or Maximum Current Point Tracking (MCPT) control is known in which a resistance value is changed to change a voltage value and an electric current value for obtaining an optimum operating point at a time when electricity is supplied.

With referring to FIG. 22 (A), a circuit for supplying energy generated at a solar cell to a secondary battery is schematically illustrated. The output voltage of the solar cell varies depending on an amount of solar radiation, and in general, it varies in a range of from about 0.1V to about 0.5V per a single cell. In a case of a lithium-ion battery, a battery voltage of a secondary battery is generally about 3.7V. Accordingly, when changing the secondary battery by using the solar cell, the voltage value may be adjusted by using a boosting type switching regulator.

With referring to FIG. 22 (B), values of a resistance connected to a ground from an output terminal of a solar cell are depicted on the horizontal axis, and values of electric power outputted from the solar cell are depicted on the vertical axis, with regard to the circuit illustrated in FIG. 22 (A). The output power of the solar cell varies depending on the resistance value, and its graph is usually indicated to have a chevron shape or mount shape. A control for making the output power generated in the solar cell follow a maximum power point (which is a multiplication of the current value and the voltage value) according to the chevron shaped graph (in other words, a control for making the output power follow an optimum operating point) is referred to as Maximum Power Point Tracking (MPPT) control.

As can be seen from FIG. 22 (B), the control for obtaining the optimum operating point at which the electric power is maximized according to the chevron shaped graph is also referred to as a Hill Climbing method. During the course of this control, for example, an apparent resistance value connected to an output terminal of the solar cell may be changed by adjusting an on-off ratio of a switch(s) in the circuit. The optimum operating point of the solar cell may vary depending on the location of the solar cell and/or the weather. However, by performing the MPPT control to appropriately change the resistance value (see reference numerals R1, R2 and R3), it becomes possible to obtain the maximum output value (see reference numerals W1, W2 and W3).

With respect to the background art on this technical field, there is JP2020-137304A (which is hereinafter referred as Patent Document 1). In the Patent Document 1, it is disclosed that "the problem to be solved of this patent application is to provide a power system which facilitates an extraction of large electric power from a fuel cell power generating system to a DC power converting device by performing the MPPT control with the DC power converting device which is configured to perform the MPPT control for a solar power generation system. As the solution of the problem, especially, a control for converting characteristics is used to make electrical output characteristics of a circuit 100 for converting characteristic follow up a reference table data. According to the electrical output characteristics represented by the reference table, the output power becomes maximum when the output voltage is a value within a predetermined range, and as the output voltage becomes larger in an area where the output voltage extends over the above-mentioned value, the output current becomes smaller (see summary)".

PRIOR ART DOCUMENTS

[Patent Document 1] Japanese Unexamined Patent Application Publication No. 2020-137304

SUMMARY OF THE INVENTION

[Problem to be solved by the invention]

In general, the MPPT control is performed to obtain a maximum value according to a chevron shaped graph of electric power. However, a graph of electric current is not indicated to have a chevron shape. Accordingly, even when a maximum value of electric power is obtained based on the MPPT control, a maximum value of electric current may not be obtained. Further, when performing the MCPT control, instead of performing the MPPT control or in addition to performing the MPPT control, a relatively complex algorithm has been required. However, in a case where the capacity of electric power is limited at a time when electricity is supplied, there is an apprehension that as the amount of power consumption required for the control itself becomes larger, the efficiency of the entire system becomes lower.

Accordingly, it is an object of the present disclosure to provide a specific method that is feasible and effective for performing the MCPT control with a relatively simple configuration.

[Means for solving the problem]

To solve the above-mentioned problems, for example, the configuration described in the claims is applied. The present disclosure includes a plurality of means for solving the above-mentioned problems, and an example is given below. A power-receiving device for receiving electric power transmitted from a power-transmitting device, based on a wireless power transfer (WPT) method is provided. The power-receiving device includes:

a power-receiving antenna for receiving electromagnetic waves;

a rectifier functionally connected to the power-receiving antenna, the rectifier is adapted for converting the electromagnetic waves into DC voltages;

a controller functionally connected to the rectifier, the controller is adapted for adjusting a resistance on an output side of the rectifier; and

a power storage device for storing an output of the controller;

Voltage-current characteristics of the rectifier vary according to a distance between the power-transmitting device and the power-receiving device.

The controller is adapted for performing Maximum Current Point Tracking (MCPT) control by stepwisely changing a resistance value so that a voltage value on the output side of the rectifier is lower than a predetermined threshold value.

[Effect of the invention]

According to the present disclosure, it becomes possible to provide a specific method that is feasible and effective for performing the MCPT control with a relatively simple configuration.

BRIEF DESCRIPTION OF THE DRAWINGS

FIG. 1 is an example of a diagram for schematically illustrating an embodiment of a power-receiving device.

FIG. 2 is an example of a diagram for illustrating an output of a rectifier in the power-receiving device, with three graphs.

FIG. 3 is an example of a diagram for illustrating an implementation of the MCPT control.

FIG. 4 is an enlarged view of a part of FIG. 3.

FIG. 5 is an example of a diagram for illustrating a process flow of the MCPT control.

FIG. 6 is an example of a diagram for illustrating a circuit for implementing the step S203 depicted in FIG. 5.

FIG. 7 is an example of a diagram for illustrating a circuit for implementing the step S204 depicted in FIG. 5.

FIG. 8 is an example of a diagram for illustrating a circuit for implementing a NAND circuit with the output logic of FIG. 6 and that of FIG. 7.

FIG. 9 is an example of a diagram for illustrating a circuit for implementing the step S205 and the step S206 depicted in FIG. 5.

FIG. 10 is an example of a diagram for illustrating a circuit for implementing the step S205 and the step S206 depicted in FIG. 5.

FIG. 11 is an example of a diagram for illustrating a modification of the process flow depicted in FIG. 5.

FIG. 12 is an example of a diagram for illustrating modified examples in which a buck converter or a boost converter is added to the power-receiving device.

FIG. 13 is an example of a diagram for illustrating a modified example in which a buck converter and a boost converter are connected in parallel to the power-receiving device.

FIG. 14 is an example of a diagram for illustrating a modified example in which a buck-boost converter is added to the power-receiving device.

FIG. 15 is an example of a graph illustrating effects of adding a buck converter or a boost converter to the power-receiving device.

FIG. 16 is an example of a diagram for illustrating a modified example in which a LDO is added to the power-receiving device.

FIG. 17 is an example of a diagram for illustrating a modified example in which a transmitter for transmitting feedback signals is added to the power-receiving device.

FIG. 18 is an example of a diagram for illustrating a modified example in which a transmitter for transmitting feedback signals is added to the power-receiving device.

FIG. 19 is an example of a diagram for illustrating a power-receiving device including a MCPT controller with a memory and a CPU.

FIG. 20 is an example of a diagram for illustrating a case where a distance is calculated, on a side of the power-receiving device, based on the received electric power.

FIG. 21 is an example of a diagram for illustrating a case where the power-receiving device receives data about a distance which is determined by the power-transmitting device.

FIG. 22 is an example of a diagram for illustrating a circuit for charging a secondary battery by using a solar cell, and a graph for indicating a relationship between the resistance values and power values in the circuit.

DESCRIPTION OF THE PREFERRED EMBODIMENTS

Hereinafter, embodiments for carrying out the invention will be explained by referring to figures. Each one of the below-mentioned embodiments is given as an example for providing the invention. The contents of the invention will not be limited by the descriptions of the below-mentioned examples.

Example 1

ENTIRE CONSTITUTION OF POWER-RECEIVING DEVICE

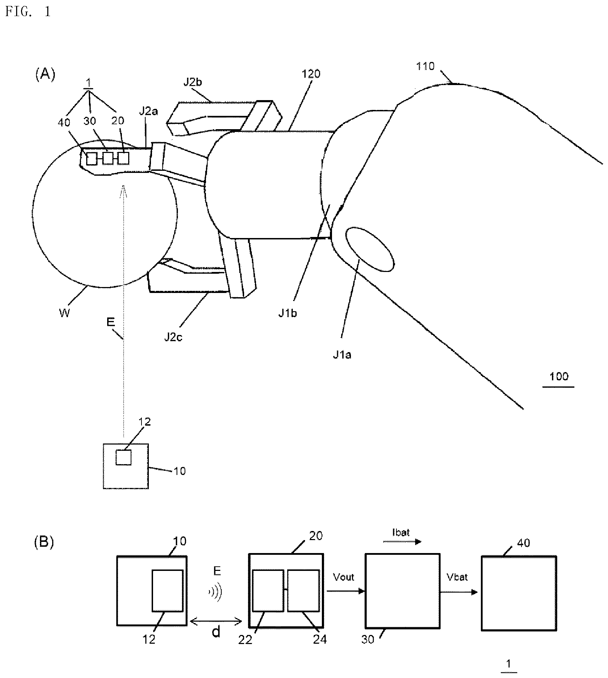

With referring to FIG. 1 (A), an example of a power-receiving device 1 for receiving energy E transmitted from a power-transmitting device (or Power Tx) 10 is schematically illustrated.

The power-receiving device 1 is provided for a device consuming electric power which may be used in various machines 100, for example, in fields of FA (such as a factory automation), IoT (Internet of Things), and home electric appliances, etc.

The power-receiving device 1 is applicable to various embodiments. For example, in the example illustrated in FIG. 1, the power-receiving device 1 is provided in a machine 100 which may be an industrial robot (for example, a machine tool) or a domestic robot (for example, a home electric appliance), etc. The machine 100 may be configured to be used in a variety of applications, such as grasping, picking, placing, assembling, painting, or welding, etc., of a workpiece (or a component) W. For example, the machine 100 is an articulated robot which is capable of performing various operations at a high degree of freedom.

In general, the articulated robot 100 includes a plurality of (at least two) shafts and/or joints J1a, J1b, J2a, J2b, and J2c for operating a robot arm unit 110 and/or a robot hand unit 120 at a high degree of freedom. In general, as the number of the joints J1a, J1b, J2a, J2b, and J2c becomes larger, the degree of freedom of the articulated robot 100 becomes higher, but more precise control will be required accordingly. On the other hand, as the number of the joints J1a, J1b, J2a, J2b, and J2c becomes smaller, the mechanism of the articulated robot 100 becomes simpler, and malfunction thereof will be less likely to occur.

In a case where a power supply wire is provided inside the machine 100 in order to supply electric power to a device provided in the articulated robot 100, there are several problems due to movements of the joints J1a, J1b, J2a, J2b, and J2c of the articulated robot 100. For example, loads may be applied to the wire, and there is a risk that the wire may be broken. Accordingly, a maintenance of the wire will be required. In addition, in a machine (for example, the articulated robot 100) which is capable of performing various operations at a high degree of freedom, various components such as one or a plurality of actuators are already provided therein. Therefore, there is a problem that a size of a space for installing the wire is limited.

The power-receiving device 1 is configured to wirelessly receive energy E transmitted from the power-transmitting device 10. Therefore, even when a feeding target (which is a device such as a sensor) is included in the articulated robot 100, and the position of the feeding target is frequently changed, it is possible to transmit necessary electric power to the feeding target from a distant place. Accordingly, the above-mentioned problems of the wiring will be avoided.

The power-receiving device 1 may also be referred to as a power-receiver, a power-receiving system, or the like, and is hereinafter referred to as the power-receiving device 1. In addition, the power-transmitting device 10 which is paired with the power-receiving device 1 may also be referred to as a power-transmitter, a power-transmitting system, or the like, and is hereinafter referred to as the power-transmitting device 10.

The power-receiving device 1 is applicable to various machines 100 in an arbitrary manner. For example, all of the parts of the power-receiving device 1 may not be accommodated in a finger of the robot hand unit 120 illustrated in FIG. 1 (A). For example, a relatively large bulky part may be constituted to be flexible to be waded up for being put in a space of the finger. Also, it is possible to provide a part of the power-receiving system 1 at a location distant from the finger (for example, at a root of the finger of the robot hand unit 120, or at a wider place in the vicinity). Further, it is possible to provide a part of the power-receiving system 1 so as to protrude to the outside of the machine 100, as needed.

The power-receiving device 1 may be provided for various applications in addition to the illustrated machine 100. For example, the power-receiving device 1 may be installed in a general FA device so as to supply electric power to a sensor such as a proximity sensor or a magnetic sensor for detecting objects on a factory-line. Furthermore, the power-receiving device 1 may be provided with a temperature and humidity sensor, an illuminance sensor or the like for monitoring conditions in office environments in the whole field of the building management system.

Referring again to FIG. 1 (A), it is illustrated that the power-transmitting device 10 is disposed at an appropriate location outside the articulated robot 100 in order to wirelessly transmit energy E to the power-receiving device 1. There are several types for wirelessly transmitting electric power. Preferably, the present example is configured to perform wireless power transfer (or wireless power supply) between the power-transmitting device 10 and the power-receiving device 20 based on a microwave system. According to the microwave system, it is possible to transmit energy E (or electric power) at a relatively long distance. For example, when performing the wireless power transfer based on the microwave system, electric power having a capacity in a range of from about 1mW to about 10mW may be transmitted by a distance of about 1 m.

With referring to FIG. 1 (B), configuring elements of the power-receiving device 1 are schematically illustrated. The power-transmitting device 10 is configured to be controlled by a controller (not shown) to transmit energy E from a power-transmitting antenna unit 12 to the outside. It is intended that energy E is received by a rectenna (or a power-receiving antenna) 20 of the power-receiving device 1. The rectenna 20 includes a power-receiving antenna unit 22 which is configured to receive energy E from a plurality of directions, and a rectifier 24 functionally connected to the power-receiving antenna unit 22.

The power-receiving antenna unit 22 may have any configuration. The power-receiving antenna unit 22 may be variously configured, for example, by using a dipole antenna, a monopole antenna, a slot antenna, a chip antenna, or the like. The power-transmitting antenna unit 12 and the power-receiving antenna unit 22 are separated from each other by a distance d. An amount of power to be wirelessly transmitted from the power-transmitting device 10 toward the power-receiving device 20 will be attenuated in inverse proportion to the square of the distance d according to the Friis transmission formula.

The rectifier 24 is an electrical element having a rectifying function for sending a current of electricity only in one direction. The rectifier is capable of converting electromagnetic waves (RF) received by the receiving-antenna unit 22 into direct voltages (DC). The rectifier may be integral with the receiving-antenna unit 22. In this way, the rectenna 20 rectify microwaves and convert them into direct currents.

The voltage outputted from the rectenna 20 is supplied to a controller or a VCT (or voltage controlled resistance) 30 so as to adjust the voltage (for example, the voltage is adjusted from $V_{out}$ to $V_{bat}$). Subsequently, the output $V_{bat}$ is supplied to a power storage device 40. At this time, its current value $I_{bat}$ is also adjusted in accordance with the change in the voltage value. Here, $V_{out}$ represents the output voltage value of the rectifier 24, and $V_{bat}$ represents the voltage value of the power storage device 40. As described below, the VCR30 is provided to perform MCPT control, and thus it may be referred to as a MCPT controller 30 or simply as a controller 30.

The power storage device 40 is an arbitrary device which is capable of storing electricity therein, and is preferably a secondary battery (or a battery). A charger (not shown) may be combined with the battery 40. The battery 40 is an electronic component having functions of a battery (for example, a chemical battery) that is capable of being repeatedly used for a plurality of times (not only once) by performing charging. The battery 40 may be, for example, a linium ion battery, a nickel hydrogen battery, an all-solid-state battery, or the like. However, the example of the power storage device 40 is not particularly limited to a battery. For example, the power storage device 40 may be a capacitor. Also, the power storage device 40 may be a combination of a battery and a capacitor. Hereinafter, the power storage device 40 is preferably referred to as a secondary battery.

OUTLINE OF MAXIMUM POWER POINT TRACKING (MCPT) CONTROL

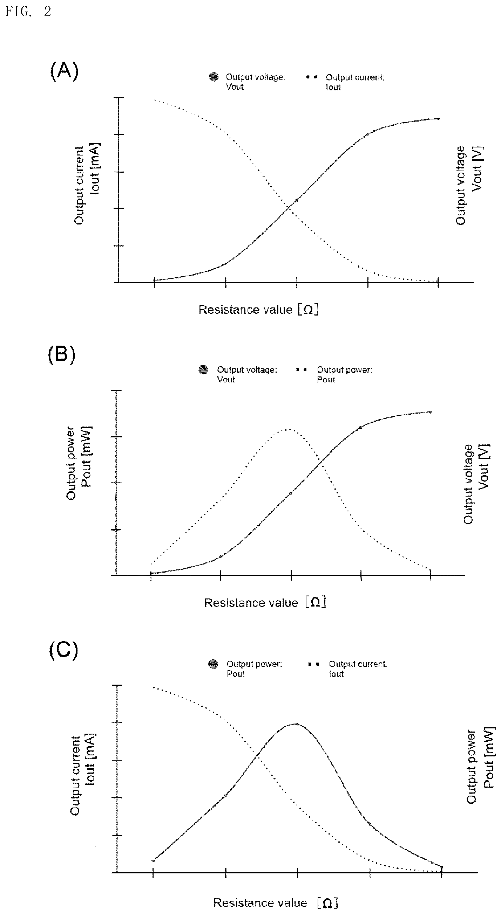

In FIG. 2 (A) - (C), three graphs are depicted for exemplifying the output of the rectifier 24 in the rectenna 20 which is used for receiving energy transmitted from the power-transmitting antenna unit 12 of the power-transmitting device 10 according to the system illustrated in FIG. 1. The power-transmitting antenna unit 12 and the power-receiving antenna unit 22 are spaced apart from each other by a distance d of 500mm.

With referring to FIG. 2 (A), resistance values connected to a ground from an output terminal of the rectifier are depicted on the horizontal axis, and voltage values (see solid line) and electric current values (see broken line) which are mutually related are depicted on the vertical axis.

With referring to FIG. 2 (B), resistance values connected to a ground from an output terminal of the rectifier are depicted on the horizontal axis, and voltage values (see solid line) and electric power values (see broken line) which are mutually related are depicted on the vertical axis.

With referring to FIG. 2 (C), resistance values connected to a ground from an output terminal of the rectifier are depicted on the horizontal axis, and electric power values (see solid line) and electric current values (see broken line) which are mutually related are depicted on the vertical axis.

With referring to FIG. 2 (A), it can be seen that as the resistance value becomes larger, the output voltage value becomes larger. On the other hand, it can be seen that as the resistance value becomes smaller, the output current value becomes larger. In addition, the electric power is obtained from the multiplication of the "current value" by the "voltage value". Accordingly, as can be seen from FIG. 2 (B) and (C), the electric power may be maximized when the resistance value is an intermediate value (for example, 20kΩ).

When performing the wireless power transfer according to the microwave system, there are specific problems. For example, an amount of energy to be transmitted is limited. Further, an input impedance of the power storage device 40 may be relatively low with respect to an output impedance of the rectifier 24, on the power-receiving side. In this case, it is required to adjust (for example, to increase) an apparent input impedance of the power storage device 40. In general, in order to appropriately adjust the input impedance of the power storage device 40, MPPT control is performed on the voltage controlled resistor 30 so as to achieve an operating point at which the output power of the rectifier 24 is maximized (see FIG. 22).

As depicted in FIG. 2 (B) and (C), the graph of electric power is indicated to have a mount shape or convex shape. Accordingly, the method of the determining the maximum electric power is generally referred to as a hill-climbing method. This method may be used in MPPT control (or maximum power point tracking control). However, as can be seen from FIG. 2 (B) and (C), the maximum point of electric power and that of electric current do not coincide with each other. In the case of the present example, it is preferable to maximize electric current in order to charge the power storage device 40. Accordingly, it may cause problems when MPPT control is used in the present example.

In the present example, as described above, it is assumed that there may be problems when the output of the rectifier 24 is directly transmitted to the power storage device 40. In such a case, it is not preferable to simply apply MPPT for its control because it may decrease the electric current. This is because, in the case of MPPT control, the output current of the rectifier 24 is not adjusted to an operating point at which the output current is maximized. Consequently, in the present example, the VCR30 is provided to perform MCPT control (or maximum current point tracking control).

Here, the term "maximum" of the maximum current point tracking control may not mean an absolute maximum value of electric current. For example, as can be seen in FIG. 2 (A) and (C), the theoretical maximum value of electric current is not preferable because the voltage and the electric power are minimized. Therefore, the MCPT is performed to maximize the current value to the extent that the required voltage value or power value may be obtained.

As illustrated in FIG. 1 (A), for example, when electric power is supplied to the articulated robot 100, the operable area may be changed depending on the environment (for example, the robot arm unit 110 and/or the robot hand unit 120 is capable of moving at a high degree of freedom). In this way, the distance d between the power-transmitting side and the power-receiving side may be changed. Accordingly, the operating point at which the output current at the power-receiving side is maximized may not become constant. In order to address this problem, it is conceivable to prepare a dedicated algorithm which is capable of dealing with various environments.

However, when such a dedicated algorithm is used, electric power will be consumed for the control itself. Especially, as the algorithm becomes complicated, or as the part(s) provided for the algorithm becomes complicated, the consumption power will become larger. Especially, when performing the wireless power transfer according to the microwave system, an amount of energy to be transmitted is limited. As a result, the efficiency of the system may be reduced as a whole by consuming a relatively large amount of power for the control itself.

In particular, in the conventional MPPT/MPPT control, frequently, the control is performed with a CPU and a memory. For example, in the prior art disclosed in the above-mentioned Patent Document 1, the control is performed by using a MCU (micro-control unit) 51. Usually, the MCU is a microprocessor which has a plurality of peripheral functions such as an I/O related function and a memory (for example, ROM and/or RAM) to be mounted on the MCU. In addition, the control unit 170 includes a memory 173 in which a plurality of table data may be stored.

The present example 1 is configured to perform MCPT control with low power consumption.

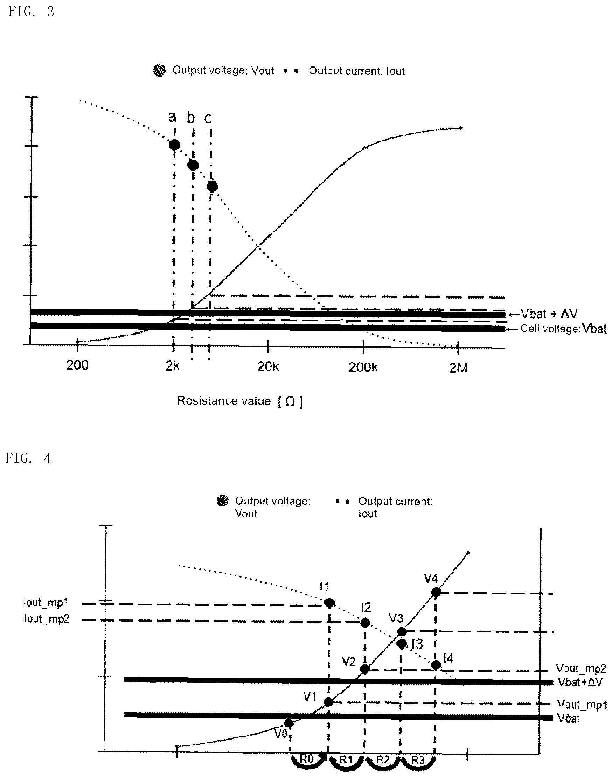

With referring to FIG. 3, an example of MCPT control is illustrated. In this figure, values of resistance are depicted on the horizontal axis, and values of electric power and values of electric current are simultaneously depicted on the vertical axis (for example, see FIG. 2 (A)). As can be seen from the figure, the battery voltage (which is the voltage value of the power storage device 40) $V_{bat}$ has a predetermined lower value and a margin $\Delta V$ above the predetermined lower value, as depicted by the two horizontal thick lines. Preferably the voltage value $V_{out}$ falls within this range (of from "$V_{bat}$" to "$V_{bat} + \Delta V$"). Therefore, by changing the resistance value to bring the voltage value within this range, the electric current value will be correspondingly changed (for example, see reference numerals a, b, and c in FIG. 3).

With referring to FIG. 4, an enlarged view of a part of FIG. 3 is depicted.

As can be seen from FIG. 4, as the resistance value becomes larger in a stepwise fashion (see reference numerals R1, R2 and R3), the voltage value becomes larger stepwise (see reference numerals V1, V2, V3 and V4) and the electric current value becomes smaller stepwise (see reference numerals I1, I2, I3 and I4), correspondingly. In other words, as the resistance value becomes smaller in a stepwise fashion, the voltage value becomes smaller and the electric current value becomes larger, correspondingly.

In FIG. 4, a curve line (dotted line) indicates the output current on the side of the rectifier 24, a curve line (solid line) indicates the output voltage on the side of the rectifier 24, and two thick lines indicate the battery voltage $V_{bat}$ of the power storage device 40 and the voltage value which is larger by a predetermined value $\Delta V$ than the battery voltage $V_{bat}$ (for example, $V_{bat} + \Delta V$). During the course of MCPT control, the current value I is made to be maximized while the voltage value is brought in the range of from the battery voltage $V_{bat}$ to the predetermined upper limit value ($V_{bat} + \Delta V$).

For example, each of the voltage values V4, V3 and V2 (see FIG. 4) is not preferable because the corresponding output voltage value $V_{out}$ exceeds the above-mentioned value ($V_{bat} + \Delta V$) in each case. On the other hand, the voltage value V1 (see FIG. 4) is preferable because the corresponding output voltage value $V_{out}$ is lower than the above-mentioned value ($V_{bat} + \Delta V$). In this case, the output voltage value $V_{out}$ exceeds the battery voltage $V_{bat}$.

For example, in a case of a typical lithium-ion battery or an all-solid-state battery, etc., the battery voltage $V_{bat}$ is about 3.7V. Also, in a case of a semi-solid-state battery or a lithium-ion titanate battery, etc., the battery voltage $V_{bat}$ is about 2.5V.

It is possible to arbitrarily set the size of the margin indicated by $\Delta V$ with regard to the battery voltage $V_{bat}$ according to the embodiments. For example, the margin $\Delta V$ is about 100mV. As the value of the margin $\Delta V$ becomes smaller, the accuracy of the control becomes higher, but the power consumption becomes larger. In practice, the smallest value of $\Delta V$ is about 10mV. The maximum value of $\Delta V$ is obtained by increasing $\Delta R$, so that the maximum value may be theoretically increased by any amount. For example, the maximum value is about 10V.

Preferably, the resistance value R is stepwisely changed at equal intervals, as indicated by $\Delta R$. It is possible to arbitrarily set the value of $\Delta R$ according to the embodiments. For example, $\Delta R$ is about 100 Q. Similar to the case of $\Delta V$, the finer $\Delta R$ is, the higher the accuracy of the control is, but the power consumption tends to be increased. In practice, the minimum value of $\Delta R$ is about $1\Omega$. The maximum value of $\Delta R$ may be theoretically increased by any amount, and for example, the maximum value is about $1M\Omega$.

It is possible to adjust an apparent input impedance of the power storage device 40 by performing MCPT control. Especially, by performing MCPT control, it becomes possible to adjust the operation point close to a point at which the output current of the rectifier 24 is maximized.

This system may deal with any environment. In particular, it is possible charge the power storage device 40 with high efficiency under any environment, by using the rectifier 24 in which the voltage-current characteristics change according to the distance d.

As described below, it is possible to perform this control by using a basic electronic circuitry which is capable of being configured without requiring high-power consuming devices such as a memory or a CPU so that excellent effects such as implementing the entire system with low power consumption can be achieved.

FLOW CHART OF MCPT CONTROL

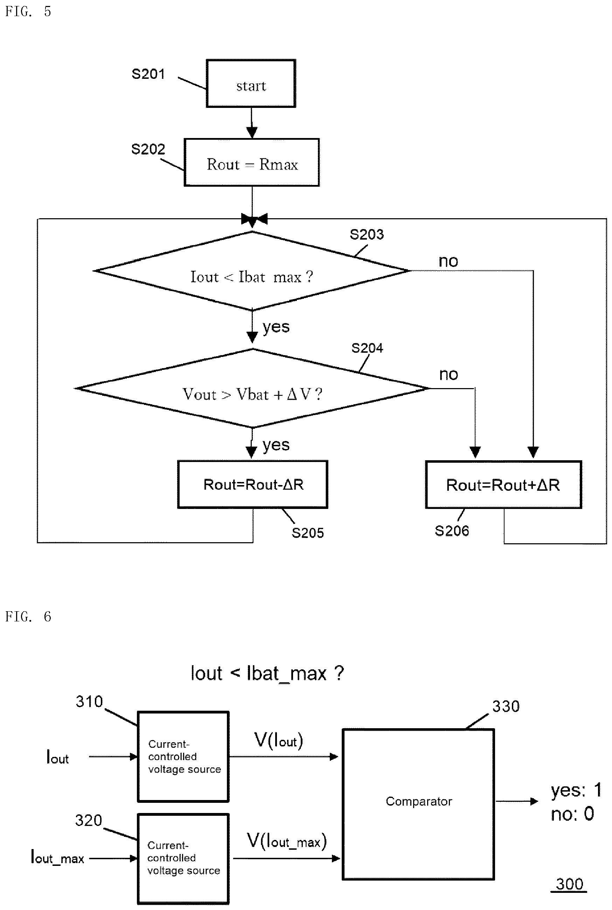

With referring to FIG. 5, a process flow of MCPT control which is performed in the VCR30 is exemplified. According to the flow of FIG. 5, the MCPT control is started at step S201. This step may be started at any timing. For example, it may be simultaneously started with a start of use of an industrial robot 100 (for example, at the power-on, etc.) for supplying electric power to an arbitrary device (for example, a sensor, etc.) in the industrial robot 100.

Subsequently to the start of the control, the VCR30 sets the resistance value to an initial value or default value at step S202. For example, the resistance value may be set to a maximal value (for example, $R_{out} = R_{max}$). This means that the control is started from the rightmost side in the graph illustrated in FIG. 3 or FIG. 4.

The initial resistance value is not limited to the maximum value. For example, the initial value may be set to an intermediate value (for example, an intermediate value of the graph illustrated in FIG. 3 or FIG. 4; or a value between the rightmost value and the intermediate value of the graph illustrated in FIG. 3 or FIG. 4). In a case where the intermediate value is selected as the initial value, it is possible to empirically derive the value according to the embodiments by repeating the control for a plurality of times. On the other hand, in a case where the maximum value is selected as the initial value, it is possible to eliminate the above-mentioned work of empirically deriving.

On the contrary, the minimum value (for example, the leftmost value of the graph illustrated in FIG. 4) is not selected as the initial value. This is because the smallest resistance value may be unstable and vary greatly depending on the cell voltage ($V_{bat}$).

Hereinafter, it is assumed that, at step S202, the maximum value is selected as the initial resistance value (for example, $R_{out} = R_{max}$).

Subsequently, at step S203, the VCR30 determines whether or not the output current $I_{out}$ is lower than the predetermined maximum value $I_{bat\_max}$ (for example, $I_{out} < T_{bat\_max}$).

For example, at the reference numeral I4 of FIG. 4, it is determined that the output current value $I_{out}$ is lower than the predetermined maximal value $I_{bat\_max}$. In other words, it is determined that a desired maximum current value is not obtained at this condition.

In a case where the result of the determination is "yes" in the step S203, the VCR30 proceeds to the step S204 to determine whether or not the output voltage $V_{out}$ is larger than the predetermined maximal value ($V_{bat} + \Delta V$).

For example, at the reference numeral V4 in FIG. 4, it is determined that the output voltage value $V_{out}$ exceeds the above-mentioned value ($V_{bat} + \Delta V$).

Subsequently, in a case where the result of the determination is "yes" in the step S204, the VCR30 reduces the value of the resistance by a predetermined size $\Delta R$ at step S205 (for example, $R_{out} = R_{out} - \Delta R$).

For example, in the graph illustrated in FIG. 4, the resistance value is reduced by the size of R3. Consequently, the voltage value is decreased from V4 to V3, and also the current value is increased from I4 to 13.

By repeating the above-mentioned steps S203, S204 and S205 by the VCR30, the resistance value is stepwisely decreased (for example, R3, R2, R1), and accordingly, the voltage value is stepwisely decreased (for example, V4, V3, V2, V1), and simultaneously the current value is stepwisely increased (for example, I4, I3, I2, I1). Preferably, the size of the stepwise change in the resistance value is constant (for example, R3 = R2 = R1 = $\Delta R$). However, it is possible to change the size of the resistance value. For example, it is possible to set a relatively large resistance value on the rightmost side in FIG. 3 or FIG. 4. Also, it is possible to set a relatively small resistance value in the middle of FIG. 3 or FIG. 4.

By repeating the above-mentioned steps S203, S204 and S205, a condition in which the output voltage $V_{out}$ is determined not to exceed the predetermined maximal value ($V_{bat}$ + $\Delta V$) will occur during the determination process at the step S204, for the pair of V1 and I1. For example, the graph of FIG. 3 illustrates that the value V1 of the output-voltage $V_{out}$ does not exceed the value of ($V_{bat}$ + $\Delta V$). Consequently, the value I4 corresponding to the value V4 is selected as a suitable current value.

On the other hand, in a case where the VCR30 determines that the output current $I_{out}$ is higher than the predetermined maximum value $I_{bat\_max}$, the result of the determination becomes "no" at the step S203. Accordingly, at the step S206, the resistance value is increased by a predetermined size $\Delta R$ (for example, $R_{out}$ = $R_{out}$ + $\Delta R$) at the step S203.

Similarly, in a case where the VCR30 determines that the output voltage $V_{out}$ is lower than the predetermined maximum value ($V_{bat}$ + $\Delta V$) at the step S204, the result of the determination becomes "no" at the step S204. Accordingly, the resistance value is increased by the predetermined size $\Delta R$ (for example, $R_{out}$ = $R_{out}$ + $\Delta R$) at the step S206.

For example, in the graph illustrated in FIG. 3, it is depicted that the value V0 of the output voltage $V_{out}$ is less than the value of ($V_{bat}$ + $\Delta V$). In such a case, the resistance value is increased by a size of R0 in the graph illustrated in FIG. 3. As a result, the voltage value is increased from V0 to V1 so that a desired voltage value is obtained mean while the current value is correspondingly lowered.

Therefore, in the flow chart of FIG. 5, it is determined whether or not the target voltage value $V_{out}$ falls within the range between the two threshold values ($V_{bat}$ + $\Delta V$) and ($V_{bat}$). Thus, in a case where the value $V_{out}$ is smaller than the value of ($V_{bat}$ + $\Delta V$), it means that the voltage value may fall within the preferable range. On the other hand, in a case where the value $V_{out}$ is larger than the value of ($V_{bat}$ + $\Delta V$), it means that the voltage value does not fall within the preferable range.

According to the present control method, when the output voltage $V_{out}$ is less than the value of ($V_{bat}$ + $\Delta V$) (for example, the value V0) in the graph illustrated in FIG. 4, it is possible to exclude the condition corresponding to the value V0. This is because, once the value falls within the range between the "two threshold values " and the resistance value is further reduced from this condition (-$\Delta R$), then the value is moved to V0, but at this time, the control for increasing the resistance value (+$\Delta R$) will be performed as described above.

As a result, as described above, a sequential control is performed in the flow chart of FIG. 5. Accordingly, the voltage value may not be allowed to remain permanently in V1, but the voltage value may mainly move back and forth between V1 and V2. That is, by performing the MCPT control, a condition of "vibrating in the vicinity of the optimum value" may be obtained eventually. As a result, an idealized condition may be achieved by the present control.

In this way, by repeating the above-mentioned steps S203, S204, S205 and S206, when the position of the feeding target is changed and the distance d between the power-transmitting device 10 and the power-receiving device 1 is changed (see FIG. 1 (A)), the size of the resistance may be adjusted by the VCR30. Accordingly, the desired current value I1 may be obtained continuously.

## CONFIGURATIONS FOR IMPLEMENTING MCPT CONTROL

Hereinafter, means for implementing the each step of the flow illustrated in FIG. 5 will be described in detail with reference to FIGS. 6 to 10.

Each configuration illustrated in FIGS. 6 to 10 is merely an example, and the present example is not limited to the configurations illustrated in these figures.

FIG. 6 illustrates a circuit 300 for implementing the step S203 depicted in FIG. 5.

That is, in FIG. 6, a circuit for determining whether or not the output current $I_{out}$ is below a predetermined maximum value $I_{bat\_max}$ (for example, $I_{out}$ < $I_{bat\_max}$) is exemplified (see step S203). As can be seen from this figure, this circuit 300 is configured to have current-controlled voltage sources (or linear current dependent voltage sources) 310, 320 and a comparator 330 in order to carry out the operation for comparing $I_{out}$ and $I_{bat\_max}$, for implementing the step 203.

The current-controlled voltage sources 310, 320 are constitutional elements for outputting voltages proportional to the detected current values.

Accordingly, by inputting a current value $I_{out}$ to an input terminal of the current-controlled voltage source 310, a voltage value V ($I_{out}$) which is proportional to the current $I_{out}$ is outputted from an output terminal thereof.

Similarly, by inputting a current value $I_{out\_max}$ to an input terminal of the current-controlled voltage source 320, a voltage value V ($I_{out\_max}$) which is proportional to the current $I_{out}$ is outputted from an output terminal thereof.

Here, it is possible to predetermine the value of $I_{out\_max}$.

The comparator 330 is a constitutional element for comparing two voltage values or current values to switch its output depending on which is larger.

In the illustrated example, the above-mentioned voltage V ($I_{out}$) and voltage V ($I_{out\_max}$) are inputted to the comparator 330, and the output is switched depending on which is larger.

That is, in a case where the value of the voltage V ($I_{out}$) is larger than the value of the voltage V ($I_{out\_max}$), the output of the comparator 330 becomes a positive maximum voltage, and in the other case, the output of the comparator 330 becomes a negative maximum voltage. There may be a case where the two input values are exactly the same, but in such a case, it is generally considered that there will be no technical problem.

Thus, in a case where the determination of this logic is "yes", "1" is outputted. On the other hand, in a case where the determination of this logic is "no", "0" is outputted. The same applies to the following descriptions.

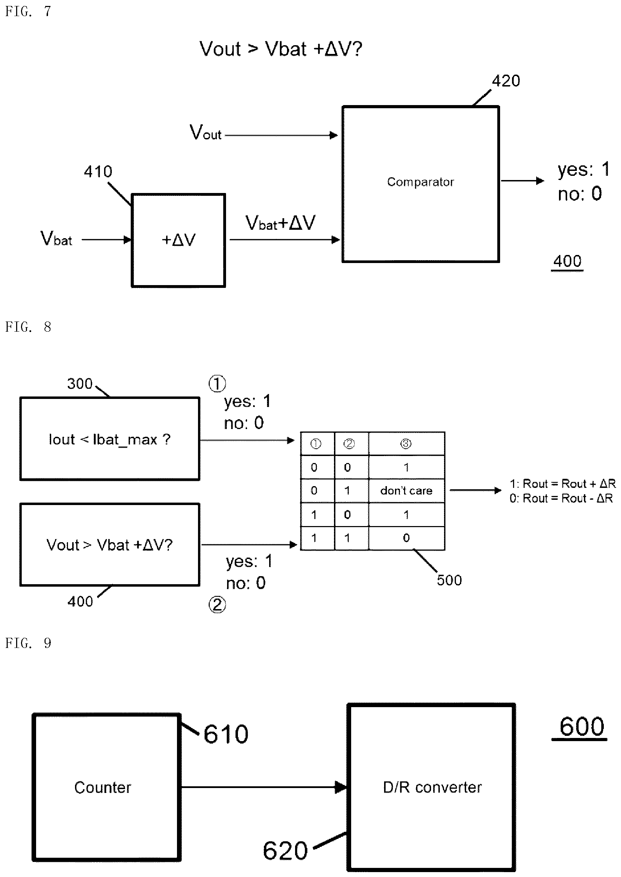

FIG. 7 illustrates a circuit 400 for implementing the step S204 depicted in FIG. 5.

That is, in the figure, a circuit 400 for determining whether or not the output voltage $V_{out}$ exceeds a predetermined maximum value $(V_{bat} + \Delta V)$ is exemplified (for example, "$V_{out}$" > "$V_{bat} + \Delta V$") (see step S204). As can be seen from the figure, the circuit 400 is configured to include a voltage source 410 and a comparator 420 in order to carry out the operation for comparing $(V_{out})$ and $(V_{bat} + \Delta V)$ to implement the step S204.

For example, an output of the voltage source 410 is inputted to the comparator 420 in order to add a predetermined voltage value $\Delta V$ to the value of the voltage source $V_{bat}$ which is functioning as a constant voltage circuit. In addition, the value of the output voltage $V_{out}$ is directly inputted to the comparator 420. These two values are compared with each other, and in a case where the result of the logic is "yes", "1" is outputted. On the other hand, in a case where the result of the logic is "no", "0" is outputted. The same applies to the following descriptions.

FIG. 8 illustrates a case where a NAND circuit 500 is provided to use the output logic of the circuit 300 illustrated in FIG. 6 and the output logic of the circuit 400 illustrated in FIG. 7. That is, in this figure, a circuit for implementing a flow using the output logic of FIG. 6 and the output logic of FIG. 7 is exemplified, and especially, the NAND circuit 500 is used for performing a NAND operation. It is possible to embody the NAND as "not AND". In general, in a case where all inputs are "High", the output becomes "0", and also in a case where any one of the inputs is "Low", the output becomes "1".

Normally, in a case where the output of the first comparator 330 is "1 (yes)", and the output of the second comparator 420 is "1 (yes)", then the output of the NAND 500 becomes "0 (no)".

Also, in a case where the output of the first comparator 330 is "1 (yes)", and the output of the second comparator 420 is "0 (no)", then the output of the NAND 500 becomes "1 (yes)".

Also, in a case where the output of the first comparator 330 is "0 (no)", and the output of the second comparator 420 is "1 (yes)", then the output of the NAND 500 becomes "1 (yes)".

Also, in a case where the output of the first comparator 330 is "0 (no)", and the output of the second comparator 420 is "0 (no)", then the output of the NAND 500 becomes "1 (yes)".

By using the above-mentioned characteristics, the following truth table may be obtained.

That is, in a case where the output of the first comparator 330 is "1 (yes)", and the output of the second comparator 420 is "1 (yes)", then the output of the NAND 500 becomes "0 (no)".

Also, in a case where the output of the first comparator 330 is "1 (yes)", and the output of the second comparator 420 is "0 (no)", then the output of the NAND 500 becomes "1 (yes)".

Also, in a case where the output of the first comparator 330 is "0 (no)", and the output of the second comparator 420 is "1 (yes)", then the output of the NAND 500 can be ignored in this example (see "don't care").

Also, in a case where the output of the first comparator 330 is "0 (no)", and the output of the second comparator 420 is "0 (no)", then the output of the NAND 500 becomes "1 (yes)".

In the above-mentioned truth table, in a case where "1" is outputted, the resistance value $R_{out}$ may be increased by a predetermined size (for example, $R_{out} + \Delta R$). In addition, in the truth table, in a case where "0" is outputted, then the resistance value $R_{out}$ may be reduced by a predetermined size (for example, $R_{out} - \Delta R$). It is possible to predetermine the size of $\Delta R$. In addition, it is possible to make modifications to the above-mentioned truth table.

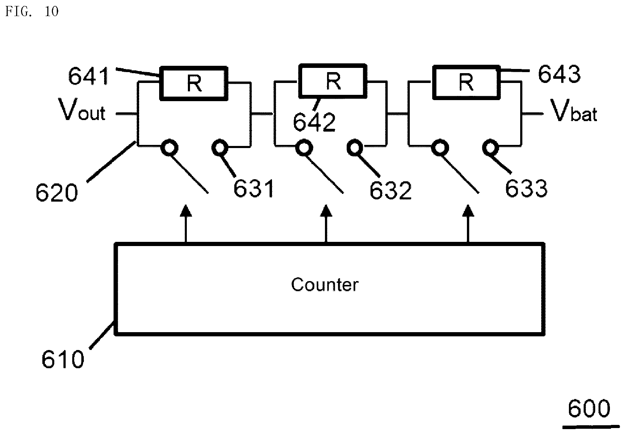

In FIGS. 9 and 10, a circuit 600 for implementing the steps S205, S206 depicted in FIG. 5 is exemplified.

With referring to FIG. 9, the output from the NAND circuit 500 (see FIG. 8) is inputted to a digital-counter (or a counter) 610. The counter 610 is configured to count up the number of times when "1" is inputted according to the output logic of FIGS. 6 and 7. In a case where "1" is inputted, it means that $R_{out}$ is decreased. Also, in a case where "0" is inputted, it means that $R_{out}$ is increased. The output of the counter 610 is sent to a D/R converter (or a Digital to Resistance converter) 620. However, it is possible to use a D/A converter (or a Digital to Analog Converter) instead of the D/R converter.

With referring to FIG. 10, the configuration schematically illustrated in FIG. 9 is more specifically depicted. As can be seen from the figure, the D/R converter 620 is configured to have voltage-controlled resistors (see reference numerals 641, 642 and 643).

The counter 610 counts up whenever "1" is inputted, and meantime, the D/R converters 620 turns off the switches one by one. Accordingly, the resistance value (see 641, 642 and 643) is increased whenever the counter 610 counts up. Preferably, the resistance value (see 641, 642 and 643) is equally increased in a stepwise fashion with a predetermined size.

With referring to FIG. 10, it is illustrated that a plurality of resistors 641, 642 and 643 are connected in series in the D/R converter 620, and correspondingly, switches 631, 632 and 643 are provided to enable a selection of any one of the resistors 641, 642 and 643. The sizes of the resistors 641, 642 and 643 are determined to be equal to each other. The digital counter 610 of FIG. 10 is configured to close the switches 631, 632 and 633 one by one each time "1" is inputted. That is, as the number of times when "1" is inputted becomes increased, the number of times when one of the switches 631, 632 and 633 is closed becomes increased. Correspondingly, the resistance values 641, 642 and 643 between $V_{out}$ and $V_{bat}$ are decreased. As a result, for example, in the graph of FIG. 4, a shift from the right side to the left side is achieved.

In this way, the circuit 600 is configured to turn off the switches 631, 632 and 643 one by one, each time the number is counted up, in order to stepwise change the value of the resistances 641, 642 and 643. In FIG. 10, three resistors 641, 642 and 643 are connected in series, but the number, the size, the arrangement, and the like of the resistors 641, 642 and 643 may be variously changed according to the embodiments. In addition, the sizes of the resistors 641, 642 and 643 may not be necessarily the same. For example, supposing that the control is started from the rightmost side in FIGS. 3, 4, a resistance having a relatively larger value may be selected at the initial stage of the control in order to increase the control speed.

As described above, the present example is configured to have simple configuring elements as illustrated in FIGS. 6 to 10 in order to implement the above-mentioned MCPT control having a relatively simple flow as illustrated in FIG. 5. By adopting this configuration, it becomes possible to avoid the use of complicated components and a complicated flow. In particular, it is possible to implement the MCPT control without using an expensive device having high power consumption such as a memory (or a storage device) or a CPU (or a microcomputer). Consequently, it is possible to perform the MCPT control with a relatively simple configuration in order to obtain a generally or approximately optimal operating point. This control may not always guarantee that the system is operated at the most efficient operation point. However, this example is superior in that this control may derive a suitable operating point with low power consumption.

In the above descriptions, it is supposed that the MCPT control is performed, first, to maximize the resistance value, and then to stepwise decrease the resistance value. Subsequently, the voltage value is compared with a predetermined threshold value in order to determine whether or not the electric current value corresponding to the voltage value is suitable (see FIGS. 4, 5).

The present example is not limited to the above-mentioned flow illustrated in FIG. 5. Various modifications may be made to this flow. For example, as described above, in the initial setting of the MCPT control, the resistance value is not always required to be maximized. For example, the initial value may be set as an intermediate value of the resistances on the horizontal axis of the graph illustrated in FIG. 3, or the initial value may be set as an arbitrary value between the maximum value and the intermediate value.

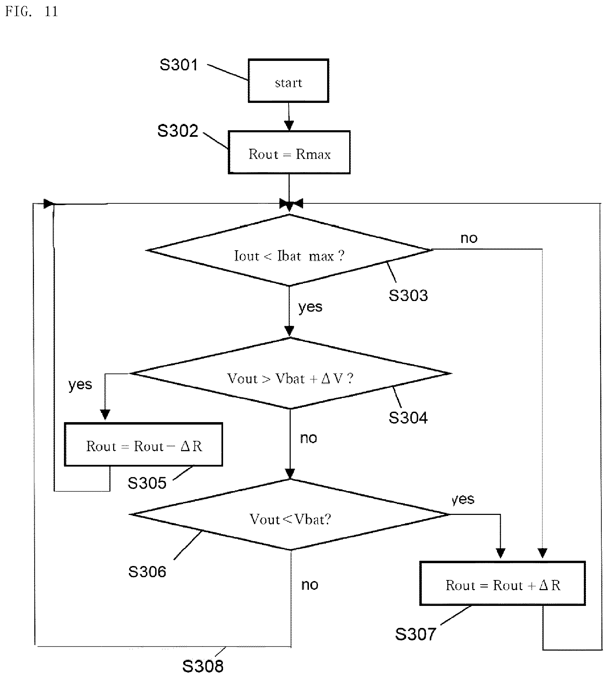

In FIG. 11, a modified example of the MCPT control is illustrated, and in this case, the voltage value is compared with two predetermined threshold values (see two horizontally thick lines in FIGS. 3, 4) in order to determine whether or not the voltage value $V_{out}$ falls within a range of from a predetermined lower limit ($V_{bat}$) to a predetermined upper limit ($V_{bat} + \Delta V$).

That is, even when the current value is maximized, it is not preferable when the voltage value deviates from the reference value of the lower reference value which is required for the power storage device. For this reason, the VCR30 may perform the determinations (see S303 and S304) in order to verify whether or not the output voltage $V_{out}$ is smaller than the predetermined upper limit ($V_{bat} + \Delta V$) and is also larger than the predetermined threshold value $V_{bat}$.

That is, with referring to FIG. 11, the VCR30 performs the determination of the below-mentioned relationship:

$$V_{bat} < V_{out} < (V_{bat} + \Delta V)$$

For example, in a case where the condition V0 occurs, then it is determined that the output voltage $V_{out}$ is smaller than the predetermined maximum value ($V_{bat} + \Delta V$) (see S304) and the predetermined threshold value $V_{bat}$ (see S306).

In such a case, the VCR30 performs the control of increasing the resistance value by a predetermined size $\Delta R$ at S307 (for example, $R_{out} = R_{out} + \Delta R$).

Accordingly, for example, with referring to FIG. 4, when the condition V0 occurs, the voltage value is increased from V0 to V1 due to the increase in the resistance value by R0. Subsequently, the VCR30 may determine that the output voltage $V_{out}$ is smaller than the predetermined upper limit ($V_{bat} + \Delta V$) and is also larger than the predetermined lower limit $V_{bat}$.

Therefore, according to the flow illustrated in FIG. 11, the value of $V_{out}$ is compared with two threshold values of ($V_{bat}$) and ($V_{bat} + \Delta V$), as shown in the steps S304 and S306. However, even in the flow illustrated in FIG. 5, the corresponding technical idea is adapted. This is because that $\Delta V$ is set to always satisfy the relationship of ($V_{out} > V_{bat}$) even when the relationship of ($V_{out} > "V_{bat} + \Delta V"$) is "No". Therefore, when comparing the examples of FIG. 5 and FIG. 11, it can be said that the flow illustrated in FIG. 5 is more preferable from the viewpoint of configuring the flow more compactly and of minimizing the required components. However, it can be said that when the example illustrated in FIG. 11 is adapted, the useless operation may be reduced.

The other modifications may be made to the flow illustrated in FIG. 5, depending on the embodiments. For example, the start condition and the end condition may be set more finely (for example, time or the like may be referred in each case).

Example 2

MODIFIED EXAMPLES OF THE POWER-RECEIVING DEVICE 1

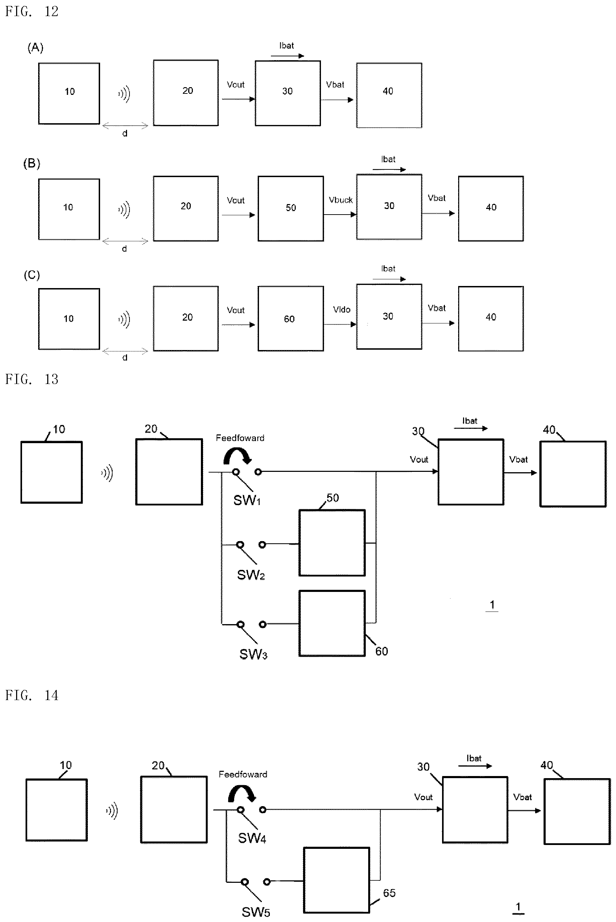

The power-receiving device 1 has been described above with referring to FIGS. 1 to 11. The configuration of the power-receiving device 1 is not limited to that which is illustrated in FIG. 1. Hereinafter, modified examples of the power-receiving device 1 illustrated in FIG. 1 will be described with referring to FIGS. 12 to 16.

With referring to FIG. 12 (A), a simplified example of the power-receiving device 1 illustrated in FIG. 1 (B) is depicted. As can be seen from the figure, the output of the rectenna 20 is transmitted to the MCPT controller 30, and then that output thereof is supplied to the battery 40.

With referring to FIG. 12 (B), a variation of the power-receiving device 1 illustrated in FIG. 12 (A) is exemplified. As can be seen from the figure, it is possible to connect the output of the rectenna 20 to a buck converter (or a step-down converter) 50 at a previous stage of the MCPT controller 30. The buck converter 50 may be a DCDC converter which is capable of providing an output at a voltage lower than the input voltage. Accordingly, it is possible to supply the converted output which is stepped down by the buck converter 50 to the MCPT controller 30.

With referring to FIG. 12 (C), a variation of the system illustrated in FIG. 12 (A) is depicted. As can be seen from figure, it is possible to connect the output of the rectenna 20 to a boost converter (or a step-up converter) 60 at a previous stage of the MCPT controller 30. The boost converter 50 may be a DCDC converter which is capable of providing an output at a voltage higher than the input voltage. Accordingly, it is possible to supply the converted output which is stepped up by the boost converter 60 to the MCPT controller 30.

Instead of the examples illustrated in FIG. 12 (B) and (C), it is also possible to connect the output of the rectenna 20 to a back-boost converter having both of the function of the step-up converter and that of the step-down converter, at a previous stage of the MCPT controller 30. In this case, it is possible to connect the back converter and the boost converter in parallel. Alternatively, it is possible to configure the back-boost converter as a single component. For example, either one of circuit configurations illustrated in FIG. 13, FIG. 14 may be used.

With referring to FIG. 13, it is exemplified that the buck converter 50 and the boost converter 60 are provided to be connected in parallel to the output of the rectenna 20, at a previous stage of the MCPT controller 30. This circuit is capable of functioning as a buck-boost converter by selecting the function of the buck converter 50 or the function of the boost converter 60 by turning on/off switches so that the converted output which is stepped up or stepped down is allowed to be supplied to the MCPT controller 30.

For example, when only the switch SW2 is turned on, only the function of the buck converter 50 is selectively used. Also, when only the switch SW3 is turned on, only the function of the boost converter 60 is selectively used.

In addition, when only the switch SW1 is turned on, both of the function of the buck converter 50 and that of the boost converter 60 are disabled. In general, the efficiency of the converter is equal to or less than 90%. Accordingly, a selection between the case of using the converter and the case of not using the converter may be made while considering of the efficiency of the converter.

Therefore, in the case of the circuit configuration illustrated in FIG. 13, the MCPT controller 30 may monitor the output voltage of the rectenna 20 and compare that output voltage with a desired voltage $V_{out}$. As a result of the condition, the MCPT controller 30 may turn on only the switch SW1 when the output voltage is equivalent to the desired voltage $V_{out}$. Also, the MCPT controller 30 may turn on only the switch SW2 when the output voltage is larger than the desired voltage $V_{out}$. Also, the MCPT controller 30 may turn on only the switch SW3 when the output voltage is smaller than the desired voltage $V_{out}$. This control is performed by feed forward control.

FIG. 14 illustrates another variation in which a buck-boost converter is added to the power-receiving device.

With referring to FIG. 14, the buck-boost converter 65 is configured as a single circuitry (or as a single device), and is configured to be switched between the case of using the buck-boost converter 65 and the case of not using the buck-boost converter 65, by switches SW4 and SW5.

For example, the MCPT controller 30 may monitor the output voltage of the rectenna 20 (or the output of the rectifier 24) and compare it to a desired voltage $V_{out}$. Consequently, when it is determined that the voltage differential between the output voltage of the rectenna 20 and the value of $V_{out}$ is large, then the switch SW5 may be turned on to selectively use the buck-boost converter 65. Alternatively, when it is determined that the voltage difference between the output voltage of the rectenna 20 and the value of $V_{out}$ is small, then the switch SW4 may be turned on not to selectively use the buck-boost converter 65. This control is performed by feed forward control.

In this way, the buck converter (or step-down type DCDC converter) does not need to function continuously. As described above, the output of the rectenna 20 directed to the MCPT controller 30 may be selectively connected to the buck converter (DCDC) 50 by the switches. In particular, in the case where the DCDC is used, the reduction in efficiency may occur due to the occurrence of impedance mismatching. Therefore, it is possible to selectively use the DCDC only when raising the voltage is required, by operating the switches.

Also, the MCPT controller 30 may monitor the output voltage of the rectenna 20 (or the output of the rectifier 24) and compare it to a desired voltage $V_{out}$. As a result, when it is determined that the output voltage of the rectenna 20 is low, a corresponding switch may be turned on to selectively enable only the boost converter 60. Also. when it is determined that the output voltage of the rectenna 20 is high, a corresponding switch may be turned on to selectively enable only the buck converter 50. Further, when it is determined that the output voltage of the rectenna 20 is equivalent to the $V_{out}$, a corresponding switch may be turned on to selectively disable both of the buck converter 50 and the boost converter 60.

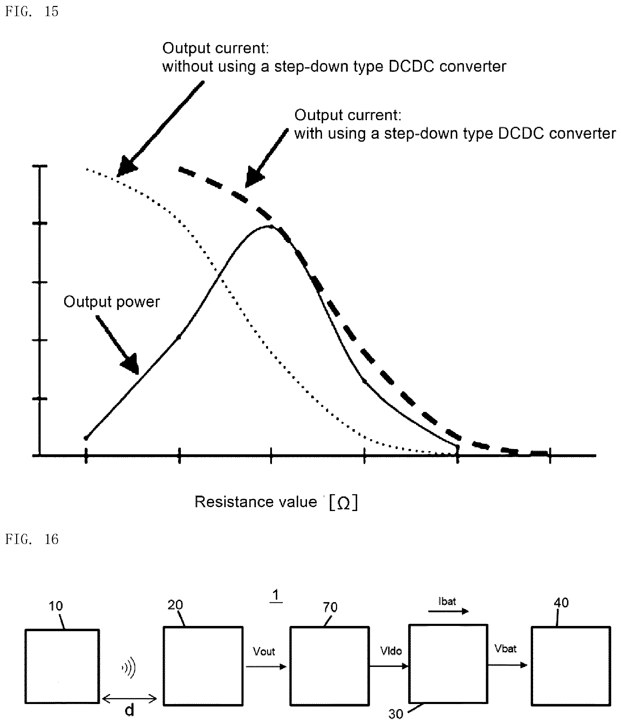

With referring to FIG. 15, the effects of using the buck converter 50 and/or the boost converter 60 will be described. As can be seen from FIG. 15 in which the outputs are depicted when the buck converter (or step-down type DCDC converter) 50 is used, the maximum value of the output power is not increased by using the buck converter 50. However, by using the buck converter 50, it becomes possible to decrease the voltage while keeping the power (which is the product of the voltage and the current) constant. Therefore, it is possible to selectively obtain the condition of "decreasing the voltage from large to small", "increasing the current from small to large", and "keeping the power constant". That is, even though the resistance value is the same (depicted on horizontal axis) in the graph of FIG. 15, the current value may be increased by using the buck converter 50 and/or the boost converter 60. In this case, with referring to FIG. 15, it can be seen that the current value is shifted in the lateral direction. Therefore, by providing the buck converter 50 and/or the boost converter 60 to the power-receiving device 1, it becomes possible to obtain the effect of increasing the current value with the same resistance value as compared with the case where the buck converter and/or the boost converter is not provided thereto. Preferably, by applying the flow of FIG. 5 to this configuration of the power-receiving device 1, it is possible to obtain the effect of maximizing the current value.

FIG. 16 illustrates another variation in which a LDO (or Low Drop-Out regulator) 70 is added to the power-receiving device.

With referring to FIG. 16, it can be seen that the output of the rectenna 20 may be connected to the LDO 70 at a previous stage of the MCPT controller. The LDO 70 is also referred to as a low-loss regulator, and it is a series regulator which is capable of operating with extremely small differences between the input voltage and the output voltage. The power converted by the LDO 70 may be supplied to the MCPT controller 30. By using the LDO 70, it becomes possible to more excellently adjust the voltage (and adjust the current correspondingly) as compared to the case where the LDO 70 is not used.

The variations of the power-receiving device 1 illustrated in FIG. 1 have been described above with referring to FIGS. 12 to 16. However, variations of the power-receiving device 1 are not limited to these examples.

For example, it is also possible to connect the output of the rectenna 20 to the buck converter 50, the boost converter 60, or the buck-boost converter 65, at a post stage of the MCPT controller 30 (not shown).

Further, it is also possible to connect the output of the rectenna 20 to the LDO 70 at a post stage of the MCPT controller 30 (not shown).

FEEDBACK OF MCPT CONTROL

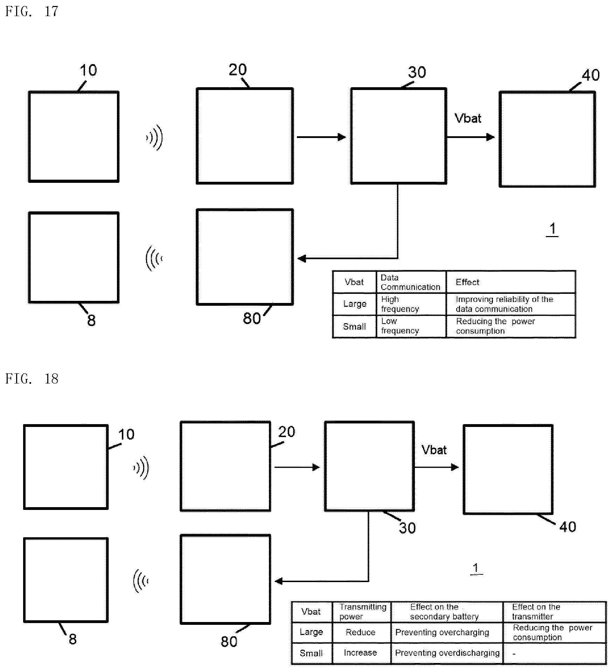

In addition, it is possible to add one or a plurality of various components to the power-receiving device 1 illustrated in FIGS. 1, 12 to 16. For example, as illustrated in FIG. 17, the power-receiving device 1 may be configured to include a data transmitter 80 which is capable of transmitting feedback signals to the power-transmitting device 10.

In the present example, the MCPT controller 30 is capable of monitoring voltage values $V_{bat}$ of the power storage device 40 for the above-mentioned control. These values may be transmitted from a data transmitter 80 on the side of the power-receiving device 1 to a data receiver 8 on the side of the power-transmitting device 10.

At this time, the frequency of the data transmission may be adjusted according to the power-receiving condition of the power-receiving device 1. For example, in a case where the value of $V_{bat}$ is large, there is a margin in electric power at the side of the power-receiving device 1. Accordingly, the MCPT controller 30 is capable of transmitting data from the data transmitter 80 to the data receiver 8 at a high frequency. Consequently, it becomes possible to increase the reliability of the data communication which is performed between the power-transmitting device 10 and the power-receiving device 1. On the other hand, in a case where the value of $V_{bat}$ is small, there is not a margin in electric power at the side of the power-receiving device 1. In such a case, the MCPT controller 30 may transmit data from the data transmitter 80 to the data receiver 8 at a low frequency. As a result, it becomes possible to reduce the power consumption of the power-receiving device 1 as a whole.

In particular, in the field of FA, etc., when the power-receiving device 1 is provided at a part constantly changing its location, such as the robot hand unit 120 or the robot arm unit 110 (see FIG. 1), it is required to correctly take the data. As described above, in the present example, the MCPT controller 30 constantly monitors the value of $V_{bat}$ so that the MCPT controller 30 constantly verifies whether or not there is a margin in power at the side of the power-receiving device 1 (for example, $V_{bat} < V_{out} < "V_{bat} + \Delta V"$). As a result, the present example is capable of increasing the reliability of the data in order to ensure the traceability. For example, even when the relative distance d between the power-transmitting device 10 and the power-receiving device 1 changes, it is possible to track the change of the power-transmitting condition with high frequency.

As described above, the transmitting condition of the data transmitter 80 may be changed depending on the power-receiving condition of the power-receiving device 1. For example, when the power-receiving condition is good, the data transmitter 80 may transmit data at a frequency of 1Msec. Alternatively, when the power-receiving condition is not good, the transmitter 80 may transmit data at a frequency of 5Msec. The power-receiving device 1 consumes electric power for the data transmission itself by using the data transmitter 80. Accordingly, when the power-receiving condition is lowered, it is possible to decrease the power consumption of the system as a whole by transmitting data at a low frequency. Conversely, when there is a margin in the power-receiving condition, the traceability of data may be improved by transmitting data at a high frequency.

Further, as illustrated in FIG. 18, the power-receiving device 1 may perform other kinds of control by transmitting feedback signals to the power-transmitting device 10.

As described above, the MCPT controller 30 of the present example monitors the values of $V_{bat}$. In a case where the value of $V_{bat}$ is too large, the power storage device 40 of the power-receiving device 1 may be overcharged. In such a case, the MCPT controller 30 may transmit a feedback signal to the power-transmitting device 10 for performing a control of stopping the power transmission of the power-transmitting device 10 (or control of reducing the magnitude of transmitting energy) in order to reduce the power consumption of the system as a whole.

On the other hand, in a case where the value of $V_{bat}$ is too small, the power storage device 40 of the power-receiving device 1 may be excessively discharged. In such a case, the MCPT controller 30 may transmit a feedback signal to the power-transmitting device 10 for performing a control of increasing the power transmission of the power-transmitting device 10 (or control of increasing the magnitude of transmitting energy).

The power-transmitting device 10 is configured to transmit energy E toward the power-receiving device 1 via the power-transmitting antenna 12 (see FIG. 1). For that purpose, a plurality of power-transmitting antennas 12 may be used. In such a case, for example, when a single power-transmitting antenna 12 is not enough for transmitting sufficient energy E, then a plurality of power-transmitting antennas 12 may be used in the power-transmitting device 10 for performing a control of simultaneously transmitting energy E from a plurality of power-transmitting antennas 12. The number of the power-transmitting antennas 12 may be any number of two or more.

A service life of the power storage device 40 may be reduced due to the over-discharging and/or over-charging. Accordingly, a feedback signal(s) corresponding to the power-receiving condition of the power-receiving device 1 may be sent to the power-transmitting device 10 in order to control the power-transmitting antenna(s) 12. As a result, it becomes possible to avoid an occurrence of inconvenient damage to the power storage device 40 so that a service life of the power storage device 40 may be increased.

In addition, a service life of the power-transmitting device 10 may be reduced due to a heat (or an operating time). Accordingly, a feedback signal(s) corresponding to the power-receiving condition of the power-receiving device 1 may be sent to the power-transmitting device 10 in order to control of adjusting the transmitting condition of the power-transmitting antenna(s) 12 in such a way as not to be in a high output condition all the time. As a result, a service life of the power storage device 40 may be increased.

Therefore, the present example is capable of increasing a service life of the power-transmitting device 10 and that of the power-receiving device 1 by performing the above-described control. Particularly, when the present example is applied in the field of FA, it may contribute to solving the problem of increasing a service life which is peculiar to the field of FA.

Example 3

As described above, according to the examples 1 and 2, the MCPT controller 30 of the power-receiving device 1 is configured to perform the control with a low power consumption. In particular, the MCPT controller 30 is configured to perform the MCPT control without using a memory or a CPU. This contributes to considerably reducing the power consumption of the power-receiving device 1 as a whole. This effect is particularly suitable for performing the wireless power transfer based on the microwave system having an upper limit on a capacity for transmitting energy.

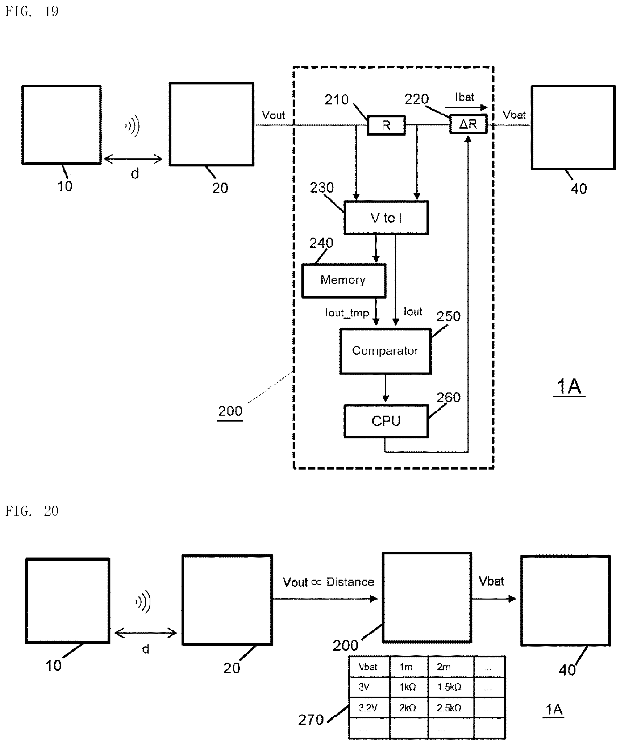

On the contrary, according to the example 3 illustrated in FIGS. 19 to 21, a MCPT controller 200 of a power-receiving device 1A is configured to perform a control with a memory 240 and a CPU 260. In this case, the power consumption of the power-receiving device 1A is increased as a whole, but a more sophisticated control is made possible. The example 3 may be used in a case where a condition of a capacity for transmitting energy is satisfied.

With referring to FIG. 19, constituting elements provided in a MCPT controller 200 of a power-receiving device 1A are schematically illustrated. As can be seen from the figure, the MCPT controller 200 is configured to include a CPU (or a processing device or a processor) 260 and a memory (or a storage device) 240.

The CPU 260 is generally defined as a device which is capable of executing a software or a program. For example, The CPU is configured as a Neumann-type computer. The CPU may be configured to include a control device for controlling the whole of the system/device, an arithmetic device, a register for temporarily storing data, an interface for a memory, and an interface for a peripheral device and an input/output device, etc.

The memory 240 is defined as a device which is capable of storing data therein. For example, the memory 240 is a primary storage device that is accessed directly by the CPU 260. Alternatively, the memory 240 is a secondary storage device that is accessed by using an input/output channel, etc. For example, the memory 240 is configured to use an arbitrary medium, a fixed disc, a volatile or non-volatile random access memory, a CD, a DVD, a flash drive, a removable media (for example, a small thumb-sized memory) which is attachable to a corresponding interface (for example, a USB port), etc.

The CPU 260 is capable of processing data by sequentially reading, interpreting and executing an instruction sequence which is referred to a program provided on the memory 240. For example, the CPU 260 is capable of performing various calculations according to various values such as resistance values and/or voltage values flowing through the circuitry of the power-receiving device 1A. For example, the CPU 260 may calculate any one of the resistance R, the current I, and the voltage V based on the Ohm's law ($V = I \times R$) when any two of these three values are obtained. For example, when the CPU 260 obtains the output voltage $V_{out}$ of the rectenna 20 and the resistance 210 at the output side of the rectenna 20, the CPU 260 may calculate the current value I based on the voltage value V and the resistive value R, as indicated by the reference numeral 230 of "V to I (calculating a current value by using a voltage value)". The calculated value may be stored in the memory 240 which is connected to the CPU 260.

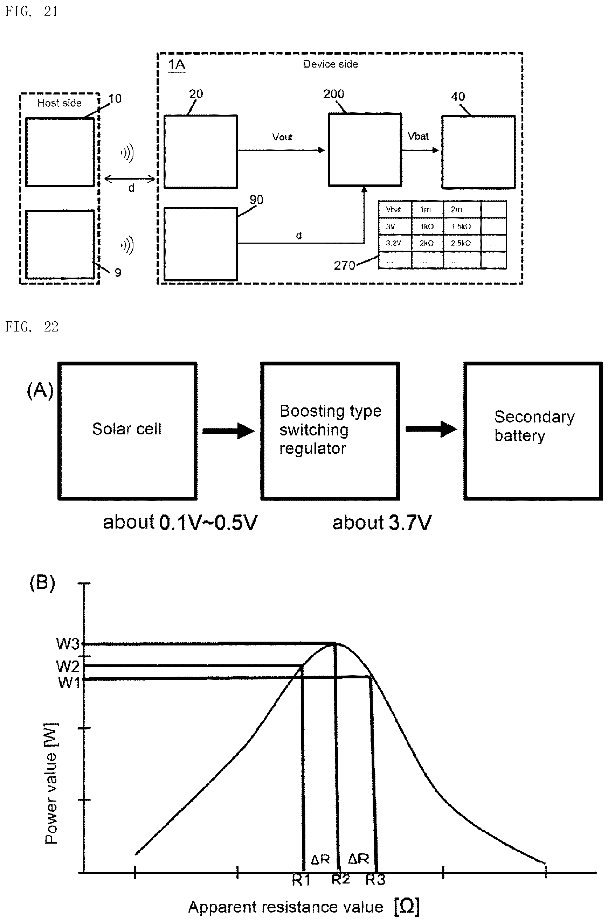

Various databases (DB) such as a table 270 (see FIGS. 20, 21) may be stored in the memory 240 in addition to the above-described one or a plurality of programs. A "database" is a functional element (or a storage part) which is capable of storing one or a plurality of data assemblies in order to accommodate any data manipulation (for example, to extract, append, delete, or overwrite data) by a processor or an external computer. The implementation method of the database is not limited, and it may be implemented by using, for example, a database management system, a spreadsheet software, or a text file such as XML, JSON or the like. Hereinafter, one or a plurality of data assemblies stored in the memory 240 are simply referred to as atable(s).

The CPU 260 is capable of storing calculated values on the memory 240 as described above. In addition, the CPU 260 is capable of extracting or referring any value stored in the memory 240 at any timing. For example, with regard to the calculated current value I, the CPU 260 may perform a comparison calculation of the previous value (or the value for the preceding step, $I_{out\_tmp}$) which is already calculated and stored in the memory 240, and of the current value (or the value of the current step, $I_{out}$), as indicated by the reference numeral 250 of a comparator. Then, the CPU 260 is capable of performing a control for the following step (for the value for the succeeding step) based on the result.

For example, according to the result of the above-mentioned comparison calculation, the CPU 260 is capable of performing a control of $\Delta R$ (to modify the resistor), as indicated by the reference numeral 220, based on the output of the comparator 250. By doing this, as illustrated in FIGS. 3 and 4, the electric current value $I_{bat}$ is appropriately changed based on the change $\Delta R$ in the resistance value, and the voltage value $V_{bat}$ which is supplied to the power storage device 40 is adjusted.

With regard to the current value I, the CPU 260 is capable of performing the controlling the changing of $\Delta R$ (to modify the resistor) based on a difference between the value for the preceding step, $I_{out\_tmp}$ and the value of the current step, $I_{out}$. For example, the CPU 260 may control $\Delta R$ (to modify the resistor) at a relatively large rate when the difference between the two values is large. Alternatively, the CPU 260 may control $\Delta R$ (to modify the resistor) at a relatively small rate when the difference is small.

The comparison calculation performed by the CPU 260 is not limited to the above-described examples. For example, with regard to the calculated current value I, the CPU 260 may perform a comparison calculation, of a past value (for example, a value of one preceding step, a value of two preceding steps, or a value of three or more preceding steps) stored in the memory 240, and of a current value (or a value of the current step), as indicated by the reference numeral 250 of the comparator. Accordingly, the CPU 260 may adjust the value of $\Delta R$ (to modify the resistor) in order to control the following step (for example, a value of one succeeding step, a value of two succeeding steps, or a value of three or more succeeding steps) based on the result.

In the field of FA or the like, for example, when the power-receiving device 1A (see the power-receiving device 1 illustrated in FIG. 1) is provided in an operating part such as the robot hand unit 120 or the robot arm unit 110, the distance d between the power-transmitting device 10 and the power-receiving device 1A will be changed, and thus the power-receiving condition will be changed accordingly.

When performing the MCPT control, it may be assumed that the optimum resistance value $\Delta R$ can be approximately determined depending on the distance d. With regard to this, in the field of FA or the like, it is possible to know an operating range of the operating part in advance. In addition, for each distance d depending on the change, it is possible to know a change in the suitable resistance value $\Delta R$ in advance.

Especially, the CPU 260 is capable of performing a control of changing the resistance value $\Delta R$ according to the information about the distance d. At this time, it is possible to create the table 270 (see FIGS. 20, 21) in advance for the values of $\Delta R$ or the like corresponding to changes in various conditions, and to store the table 270 in the memory 240. The CPU 260 is capable of referring to the tables 270 stored in the memory 240 when performing the controlling of changing of $\Delta R$.

With referring to FIG. 20 or FIG. 21, a power-receiving device which is capable of performing the MCPT control with the table 270 stored in the memory 240 is illustrated. As can be seen from the figures, changes in the distance d, changes in the voltage value $V_{bat}$ of the power storage device, and changes in the resistance value $\Delta R$ corresponding to these values may be associated in a table so as to be stored in the memory 240 in advance.

For example, with referring to the table 270, it can be seen that a resistance of 1kΩ is preferable when the voltage value $V_{bat}$ of the power storage device 40 is 3V and the distance d is 1m. Also, it can be seen that a resistance of 1.5kQ is preferable when the distance d is changed to 2m from the above-mentioned value while the voltage value $V_{bat}$ is 3V. Also, it can be seen that a resistance of 2kS2 is preferable when the voltage value $V_{bat}$ is changed to 3.2V while the distance d is 1m. Also, it can be seen that a resistance of 2.5kQ is preferable when the distance d and the voltage-value $V_{bat}$ are changed to 2m and 3.2V, respectively.

In this way, it is possible to associate the suitable resistance values with changes in the distance d and changes in the voltage value $V_{bat}$ of the power storage device 40, in the table 270 which is stored in the memory 240. These values may be obtained by actual measurements (by using a hardware) according to the individual embodiments. Also, these values may be obtained by performing simulations (by using a software). Further, these values may be obtained by using a combination of a hardware and a software. The values associated in the table are not limited to the distance value d, the voltage value $V_{bat}$ of the power storage device 40, and the resistance value. In addition, the number of the table is not limited to one, and a plurality of tables may be provided according to the embodiments so as to be arbitrary selected by the CPU 260.

Accordingly, the CPU 260 of the MCPT controller 200 is capable of storing information about the distance d in the table 270 arranged on the memory 240, and of selecting an appropriate resistance value from the table 270 prepared in advance according to an arbitrary value such as the distance d. Consequently, the CPU 260 is capable of changing the resistance value to a suitable value when the resistance value currently used is deviated from a suitable value based on the distance d. Accordingly, the CPU is capable of performing an optimizing control to bring the resistance value close to an optimum value continuously even when the distance d between the power-transmitting device 10 and the power-receiving device 1 is changed.

The above-mentioned control may not be used only for the resistance value which is currently required, but this control may be used for the resistance value which may be required in the future (for example, a value after one step, a value after two steps, or a value after three or more steps). For example, when the power-receiving device 1A (see the power-receiving device 1 illustrated in FIG. 1) is provided in an operating part such as the robot hand unit 120 or the robot arm unit 110, future movements of the machine 100 may be predictable. Accordingly, based on that prediction, it is possible to predict changes in the resistance value in advance not only for a value at present but also for a value after one step, or a value after two or more steps.

Further, by using the table 270, the CPU 260 is capable of calculating a value which is not directly obtained from the table 270. For example, the CPU 260 may determine a required value by interpolation or extrapolation based on values given in the tables 270.

For example, in a case where a value between two consecutive points M1 and M2 is required, it is possible to determine the value between the two points based on the values of the two points (by interpolation). For example, when a resistance value for the voltage value of 3V and the distance of 1.5m is required, the CPU 260 may determine the resistance value of 1.25kQ by appropriately performing an interpolation processing with respect to a resistance value of 1kΩ (which is for the voltage value of 3V and the distance d of 1m), and the resistance value of 1.5kQ (which is for the voltage value of 3V and the distance d of 2m).

Also, in a case where a value that is outside of two consecutive points M1 and M2 is required, it is possible to determine the value which is disposed on an extension of the two points based on the values of the two points (by extrapolation). For example, when a resistance value for the voltage value of 3V and the distance of 2.5m is required, the CPU 260 may determine a resistance value of 1.75kQ by appropriately performing an extrapolation processing with respect to the resistance value of 1kΩ (which is for the voltage value of 3V and the distance d of 1m), and the resistance value of 1.5kQ (which is for the voltage value of 3V and the distance d of 2m).

In this way, the CPU 260 is capable of calculating a required value based on the above-mentioned table 270. It should be noted that the calculation performed by the CPU 260 is not limited to determining an average value by the interpolation or extrapolation. For example, in a case where a value increases or decreases rapidly under certain circumstances, the CPU 260 may determine a value corresponding to the change, rather than determining an average value based on values given in the tables 270. For example, an arbitrary data such as statistical data (for example, data of a distribution, a standard deviation, a function, or the like) may be used with the table 270 considering the changes in the values.

Preferably, the MCPT controller 200 constantly monitors the voltage value $V_{out}$ in the power-receiving circuit. Also, the distance d between the power-transmitting device 10 and the power-receiving device 1A may be determined from several methods. Therefore, by using these values, the CPU 260 is capable of selecting an optimum resistance value.

FIG. 20 exemplified a case where a distance d is determined based on a received power $V_{out}$, at the side of the power-receiving device 1A. The CPU 260 is capable of measuring a received power $V_{out}$. In general, it is possible to associate the distance d with the received power $V_{out}$. For example, in a case where the measured received power $V_{out}$ is relatively large, the CPU 260 may estimate that the corresponding distance d is relatively small. Alternatively, in a case where the measured received power $V_{out}$ is relatively small, the CPU 260 may estimate that the corresponding distance d is relatively large. Such a relationship between the received power $V_{out}$ and the distance d may be determined finely in advance by measurements or calculations according to the embodiments. Therefore, the CPU 260 is capable of calculating data about the distance d between the power-transmitting device 10 and the power-receiving device 1A based on the voltage value $V_{out}$, at the output side of the rectifier 24 of the rectenna 20. The MCPT controller 200 may select an optimum resistance value based on the calculated value of the distance d which is calculated by the CPU 260.

In FIG. 21, it is exemplified that the power-receiving device 1A receives data about a distance d which is obtained by the power-transmitting device 10. As can be seen from the figure, at the host side for transmitting energy E, the power-transmitting device 10 is capable of estimating a distance d between the power-transmitting device 10 and the power-receiving device 1A based on the power-transmitting condition. For example, in a case of the robot hand illustrated in FIG. 1, the host side controls the position of the device so that it is capable of determining the distance d between the host side and the device side. The power-transmitting device 10 may transmit the data about the distance d via the data receiver 9. On the device side, the power-receiving device 1A is provided with the data receiver 90 so that at the timing of the transmitting data about the distance d from the data receiver 90, it is possible to send the data to the CPU 260. Accordingly, the CPU 260 is capable of receiving the data about the distance d between the power-transmitting device 10 and the power-receiving device 1A, from the power-transmitting device 10. The MCPT controller 200 is capable of selecting an optimum resistance value based on the data of the distance d transmitted from the data transmitter 9.

In this way, at the side of the power-receiving device 1A, the CPU 260 may determine the distance d by calculating the received power $V_{out}$ (see FIG. 20). Alternatively, at the side of the power-transmitting device 10, the CPU 260 may determine the distance d by deciding the position of the power-receiving device 1A, based on the data transmitted from the power-transmitting device 10 (see FIG. 21). The results of the control may not be necessarily fed back to the power-transmitting device 10 from the power-receiving device 1A.

As described above, in the power-receiving device 1A of the example 3 illustrated in FIGS. 19 to 21, various configuration elements may be added similar to the case of the power-receiving device 1 of the example 2 illustrated in FIGS. 12 to 18.

Further, as another aspect of the invention, it is possible to provide a computer program product that enables the MCPT control having the above-described contents, with regard to the MCPT controller 200 of the power-receiving device 1A illustrated in FIGS. 19 to 21.

The computer program product may be provided as a program, a function, a routine, or an executable object. Preferably, the computer program product includes a program code for enabling the above-mentioned MCPT control.

Therefore, the present invention also relates to a computer program product for performing the above-mentioned control to be executed by the MCPT controller 200 in the power-receiving device 1A.

The computer program product, such as computer program means, may be implemented as a memory card, a USB stick, a CD-ROM, a DVD, or a file that can be downloaded from a server in a network. For example, such a file may be provided by transferring a file having a computer program product, from a wireless communication network.

Various applications and/or modifications may be made, by a person skilled in the art, to the above-mentioned examples without departing from the scope of the claims.

For example, another component necessary for the operation may be further provided to any one of the components of the power-receiving device 1 or 1A. Also, another component may be further provided to any one of the components of the power-receiving device 1 or 1A for implementing a function(s) other than the functions described herein.

Therefore, the claims may be practiced otherwise than as specifically described herein.

EXPLANATION OF REFERENCE NUMERALS

| | |
|---|---|
| 1, 1A | Power-receiving device |
| 10 | Power-transmitting device |
| 20 | Rectenna (or Power-receiving antenna) |
| 22 | Power-receiving antenna unit |
| 24 | Rectifier |
| 30, 200 | Controller (or Voltage controlled resistance or MCPT controller) |
| 40 | Power storage device (or Battery or Capacitor) |
| 50 | Buck converter |
| 60 | Boost converter |
| 65 | Buck-boost converter |
| 70 | LDO |
| 80 | Data transmitter |
| 90 | Data receiver |

**Claims**

1. A power-receiving device for receiving electric power transmitted from a power-transmitting device, based on a wireless power transfer method, comprising:

> a power-receiving antenna for receiving electromagnetic waves;
> a rectifier functionally connected to the power-receiving antenna, the rectifier being adapted for converting the electromagnetic waves into DC voltages;
> a controller functionally connected to the rectifier, the controller being adapted for adjusting a resistance on an output side of the rectifier; and
> a power storage device for storing an output of the controller;
> wherein voltage-current characteristics of the rectifier vary according to a distance between the power-transmitting device and the power-receiving device, and
> wherein the controller is adapted for performing Maximum Current Point Tracking (MCPT) control by stepwisely changing a resistance value so that a voltage value on the output side of the rectifier is lower than a predetermined threshold value.

**2.** The power-receiving device according to claim 1, wherein the power-receiving device performs the Maximum Current Point Tracking (MCPT) control without using a CPU or a memory by stepwisely changing the resistance value so that the voltage value on the output side of the rectifier is lower than the predetermined threshold value.

**3.** The power-receiving device according to claim 1 or 2, wherein the controller includes:

> means for setting a resistance value to an initial value;
> means for determining whether or not an electric current value exceeds a threshold value,
> means for determining whether or not a voltage value exceeds a threshold value, and
> means for stepwisely changing the resistance value in a case where a voltage value exceeds a threshold value;
> wherein the controller repeats the determination on the electric current value, the determination on the voltage value, and the stepwise change of the resistance value until a desired electric current value is obtained.

**4.** The power-receiving device according to claim 3, wherein the means for determining whether or not the electric current value exceeds the threshold value is configured with a current-controlled voltage source and a comparator.

**5.** The power-receiving device according to claim 3, wherein the means for determining whether or not the voltage value exceeds the threshold value is configured with a voltage source and a comparator.

**6.** The power-receiving device according to claim 3, wherein the means for stepwisely changing the resistance value in the case where the voltage value exceeds the threshold value is configured with a NAND circuit and a counter.

**7.** The power-receiving device according to claim 3, wherein the means for stepwisely changing the resistance value in the case where the voltage value exceeds the threshold value is configured with a plurality of resistors and a plurality of switches.

**8.** A power-receiving device for receiving electric power transmitted from a power-transmitting device, based on a wireless power transfer method, comprising:

> a power-receiving antenna for receiving electromagnetic waves;
> a rectifier functionally connected to the power-receiving antenna, the rectifier being adapted for converting the electromagnetic waves into DC voltages;
> a controller functionally connected to the rectifier, the controller being adapted for adjusting a resistance on an output side of the rectifier; and
> a power storage device for storing an output of the controller;
> wherein voltage-current characteristics of the rectifier vary according to a distance between the power-transmitting device and the power-receiving device,
> wherein the controller includes a CPU and a memory,
> wherein the memory is adapted for storing a table that associates a distance between the power-transmitting device and the power-receiving device, a voltage value of the power storage device, and a resistance value on the output side of the rectifier; and
> wherein the CPU is adapted for performing Maximum Current Point Tracking (MCPT) control by obtaining data about the distance between the power-transmitting device and the power-receiving device and by adjusting the resistance value on the output side of the rectifier with the table stored on the memory.

**9.** The power-receiving device according to claim 8, wherein the controller receives data about the distance between the power-transmitting device and the power-receiving device, from the power-transmitting device.

**10.** The power-receiving device according to claim 8, wherein the controller calculates data about the distance between the power-transmitting device and the power-receiving device, based on a voltage value on the output side of the rectifier.

11. The power-receiving device according to claim 8, wherein the CPU determines control for a succeeding step by calculating an electric current value based on a voltage value and a resistance value on the output side of the rectifier, and by comparing a value for a preceding step and a value for a current step.

12. The power-receiving device according to claim 8, wherein the controller executes the following control of:

    monitoring a voltage value of the power storage device;
    transmitting an instruction to the power-transmitting device to decrease transmission power in a case where a voltage value of the power storage device is larger than a predetermined threshold value; and
    transmitting an instruction to the power-transmitting device to increase transmission power in a case where a voltage value of the power storage device is smaller than a predetermined threshold value.

13. The power-receiving device according to any one of claims 1 to 12, further comprising at least one of a buck converter, a boost converter and a buck-boost converter between the rectifier and the controller or between the controller and the power storage device.

14. The power-receiving device according to any one of claims 1 to 12, further comprising a low drop-out regulator (LDO) between the rectifier and the controller or between the controller and the power storage device.

15. The power-receiving device according to any one of claims 1 to 15, wherein the wireless power transfer is performed based on a microwave system.

FIG. 1

(A)

(B)

FIG. 2

(A)

Output voltage: Vout    Output current: Iout

Resistance value [Ω]

(B)

Output voltage: Vout    Output power: Pout

Resistance value [Ω]

(C)

Output power: Pout    Output current: Iout

Resistance value [Ω]

FIG. 3

● Output voltage: Vout ■ ■ Output current: Iout

a b c

←Vbat + ΔV
— Cell voltage: Vbat

200     2k     20k     200k     2M

Resistance value [ Ω ]

FIG. 4

● Output voltage: Vout    ■ ■ Output current: Iout

Iout_mp1
Iout_mp2

I1
I2
V3 V4
I3
V2 I4
V1

Vout_mp2
Vbat+ΔV
Vout_mp1
Vbat

V0

R0 R1 R2 R3

FIG. 5

S201 — start

S202 — Rout = Rmax

S203 — Iout < Ibat  max ? — no

yes

S204 — Vout > Vbat + $\Delta$V ? — no

yes

Rout=Rout-$\Delta$R
S205

Rout=Rout+$\Delta$R
S206

FIG. 6

Iout < Ibat_max ?

310 — Current-controlled voltage source

Iout →

V(Iout) →

330 — Comparator

yes: 1
no: 0

320 — Current-controlled voltage source

Iout_max →

V(Iout_max) →

300

FIG. 7

Vout > Vbat +ΔV?

```
Vout ─────────────────────►┌──────────┐ 420
                           │          │
        410                │          │
         ┌──────┐          │Comparator│──────►  yes: 1
Vbat ───►│      │ Vbat+ΔV  │          │         no: 0
         │  +ΔV │─────────►│          │
         │      │          │          │           400
         └──────┘          └──────────┘
```

FIG. 8

```
 300                    ①
 ┌─────────────────┐   yes: 1
 │                 │   no: 0
 │ Iout < Ibat_max?│──────────►
 │                 │
 └─────────────────┘
```

| ① | ② | ③ |
|---|---|---|
| 0 | 0 | 1 |
| 0 | 1 | don't care |
| 1 | 0 | 1 |
| 1 | 1 | 0 |

1: Rout = Rout + ΔR
0: Rout = Rout - ΔR

```
 ┌─────────────────┐
 │                 │
 │ Vout > Vbat +ΔV?│──────────►
 │                 │   yes: 1
 └─────────────────┘   no: 0
  400                ②
```

500

FIG. 9

```
        ┌──────────┐ 610      ┌──────────────┐   600
        │          │          │              │
        │ Counter  │─────────►│ D/R converter│
        │          │          │              │
        └──────────┘      620 └──────────────┘
```

FIG. 10

600

FIG. 11

S301 — start

S302 — Rout = Rmax

S303 — Iout < Ibat max ?
— no
— yes

S304 — Vout > Vbat + $\Delta$V ?
— yes
— no

S305 — Rout = Rout − $\Delta$R

S306 — Vout < Vbat?
— yes
— no

S307 — Rout = Rout + $\Delta$R

S308

FIG. 12

(A)

| 10 | | 20 | | 30 | | 40 |

Ibat

Vout     Vbat

d

(B)

| 10 | | 20 | | 50 | | 30 | | 40 |

Ibat

Vout     Vbuck     Vbat

d

(C)

| 10 | | 20 | | 60 | | 30 | | 40 |

Ibat

Vout     Vldo     Vbat

d

FIG. 13

10    20    Feedfoward    30    Ibat    40

SW₁    Vout    Vbat

SW₂    50

SW₃    60

1

FIG. 14

10    20    Feedfoward    30    Ibat    40

SW₄    Vout    Vbat

SW₅    65

1

FIG. 15

Output current:
without using a step-down type DCDC converter

Output current:
with using a step-down type DCDC converter

Output power

Resistance value $[\Omega]$

FIG. 16

10     20     <u>1</u>     70     Ibat     40

)))     Vout     Vldo     Vbat

d     30

FIG. 17

| Vbat | Data Communication | Effect |
|---|---|---|
| Large | High frequency | Improving reliability of the data communication |
| Small | Low frequency | Reducing the power consumption |

FIG. 18

| Vbat | Transmitting power | Effect on the secondary battery | Effect on the transmitter |
|---|---|---|---|
| Large | Reduce | Preventing overcharging | Reducing the power consumption |
| Small | Increase | Preventing overdischarging | - |

FIG. 19

FIG. 20

FIG. 21

FIG. 22

(A) Solar cell → Boosting type switching regulator → Secondary battery

about 0.1V~0.5V     about 3.7V

(B)

Power value [W] vs Apparent resistance value [Ω]

## INTERNATIONAL SEARCH REPORT

| International application No. |
|---|
| PCT/JP2021/014101 |

A. CLASSIFICATION OF SUBJECT MATTER
H02J 50/20(2016.01)i; H02J 50/90(2016.01)i
FI: H02J50/90; H02J50/20

According to International Patent Classification (IPC) or to both national classification and IPC

B. FIELDS SEARCHED

Minimum documentation searched (classification system followed by classification symbols)
H02J50/20; H02J50/90

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2017-158012 A (ROHM CO LTD) 07 September 2017 (2017-09-07) paragraphs [0023], [0030], [0043], [0044], [0047], [0048], [0054], [0067], [0072], [0073] | 1-7, 13-15<br>8-12 |
| Y<br>A | JP 2000-201442 A (TOKIN CORP) 18 July 2000 (2000-07-18) paragraph [0011] | 1-7, 13-15<br>8-12 |
| A | JP 2016-116325 A (IHI AEROSPACE CO LTD) 23 June 2016 (2016-06-23) paragraph [0032] | 1-15 |
| A | JP 2020-198665 A (MITSUBISHI ELECTRIC CORP) 10 December 2020 (2020-12-10) paragraph [0021] | 1-15 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 June 2021 (17.06.2021) | 29 June 2021 (29.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/014101

| Patent Documents referred in the Report | Publication Date | Patent Family | Publication Date |
|---|---|---|---|
| JP 2017-158012 A | 07 Sep. 2017 | US 2017/0256989 A1 paragraphs [0023], [0046], [0059], [0060], [0063], [0064], [0070], [0083], [0088], [0089] | |
| JP 2000-201442 A | 18 Jul. 2000 | (Family: none) | |
| JP 2016-116325 A | 23 Jun. 2016 | (Family: none) | |
| JP 2020-198665 A | 10 Dec. 2020 | (Family: none) | |

Form PCT/ISA/210 (patent family annex) (January 2015)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020137304 A